# EUROPEAN PATENT APPLICATION

(11) **EP 3 923 465 A1**
(43) Date of publication of application: **15.12.2021**
(21) Application number: 21177631.5
(22) Date of filing: 03.06.2021
(51) Int. Cl.: H02S 20/22

(54) **A CAMOUFLAGED BIPV**

(30) Priority: 04.06.2020 DK PA202000657
(71) Applicant: Wendt Ursing, Jakob, 222 29 Lund (SE)
(72) Inventor: Wendt Ursing, Jakob, 222 29 Lund (SE)
(74) Representative: Ström & Gulliksson AB

(57) **Abstract**

Present invention relates to a camouflaged BIPV comprising a PV-panel oriented in a first and a second dimension, a ventilated PV-substructure and a ventilated, translucent cover. Said cover is fixed to the frontside of said PV-panel in the form of a multitude of strips tilted in a third dimension by means of translucent spacers supporting the lower horizontal side of individual strips.

## Description

The present invention relates to a camouflaged BIPV comprising a PV-panel oriented in a first and a second dimension, a ventilated PV-substructure and a ventilated, translucent cover. Said cover is fixed to a frontside of said PV-panel in the form of a multitude of strips tilted in a third dimension by means of translucent spacers supporting a lower horizontal side of individual strips.

### BACKGROUND OF THE INVENTION

Building Integrated Photovoltaics (BIPV) in cladded roofs or façades is an interesting field for architects and building engineers since BIPV's may have important aesthetic, fastening and water-draining features. In-roof photovoltaic (in-roof PV) systems is a subgroup to BIPVs adapted for tiled roofs and characterized by its PV-panels replacing battened roof tiles.

In some situations, an in-roof installation may appear aesthetically disrupting on a non-black roof. Adding color to in-roof PV panels may reduce this disruption. But, a camouflaged BIPV as intended in the present invention, has the ambition of disguising not necessarily with color but foremost with a harmonizing pattern of perceivable shadows and reflections familiar from roof tile and corrugated metal cladding.

Therefore, the technical challenges of a camouflaging cover are different from the challenges of color integrated BIPVs as for example known from patent documents WO2018158470, WO2015155356 and WO2014045141.

It is, however, common knowledge to provide a translucent profiled cover that is letting the majority of its insolation pass through to photovoltaic cells, as for example in patent document WO2018/122200 A1. The idea of attaching a translucent fully covering sheet to a PV assembly is also known in for example patent document WO2017/037231 A1 that describes a framed PV-panel fitted on a roof having a translucent cover fixed on its front side. The heating effect of the covers is however not taken care of in the examples mentioned above.

Furthermore, there are several in-roof PV products marketed as for example MOUNTING-SYSTEMS INFIX or GSE IN-ROOF having standard framed PV-modules that may serve as substrate to such a translucent cover. Maybe 99% of all PV-modules sold globally are framed with a profile height of 35 to 50 mm, making very large volumes possible and cost-efficiency achieved. MONIER PV INDAX, SCHWEIZER SOLRIF are alternative in-roof PV products with competing module "standards" having a price-gap disadvantage to standard framed panels' constantly dropping prices. The above mentioned in-roof PV products have different PV-substructures adapted for standard frame profiles as well as for special frame profiles. Battened roof tiles have a construction comprising wooden boards covered by tar paper with a grid of battens and counter-battens supporting the tiles. A tiled façade construction may have a different substrate, but the battened substructure is basically the same. A translucent cover on above mentioned in-roof PV products, would tend to "hover" over surrounding tiles, thus defaulting the intended disguising effect, unless a specifically suppressed installation method would be used. The reason for this being that surrounding roof or façade construction has lower built height than currently known in-roof panels. A camouflaged BIPV would therefore need a more suppressed, potentially less ventilated, installation compared to currently known in-roof systems.

More importantly for the present invention, the translucent cover fixed on the front side of the PV-panel in the previous art, lack adequate ventilating openings above the PV-panel. Therefore, cooling would be hampered by reduced ventilation on the front side of its photovoltaic laminate. Poor cooling reduces electric output from photovoltaic modules by approximately 0,4 percent per centigrade elevated temperature.

So, in summary, there are problems with adequate ventilation of a camouflaged BIPV through openings under and above its photovoltaic laminate, but the present invention responds specifically to the problem with insufficient ventilation above it. Consequently, a need exists for a device improving the cooling of the top of a fully covered PV-panel by means of improved ventilation.

### SUMMARY OF THE INVENTION

The technical problem underlying the present invention is how to cool the front of the photovoltaic laminate on a camouflaged PV-panel by means of a ventilation when air flow is hampered by the translucent cover added to its assembly at the same time.

Accordingly, the technical task to be solved by the present invention is to suggest a BIPV that allows for both these functions. The given task is solved by the subject-matter of independent claims 1, 9 and 10. Preferred embodiments of the invention disclosed herein can be gained from the dependent claims and the description.

In order to remedy some of the disadvantages of prior art the present invention proposes a BIPV-element that is combining an in-roof PV with a ventilated translucent cover in order to camouflaged it as surrounding cladding.

A first aspect of the invention therefore refers to a camouflaged BIPV comprising a PV-panel oriented in a first dimension and a second dimension, further comprising a ventilated PV-substructure and a ventilated translucent cover. According to the invention, said cover is fixed to a frontside of said PV-panel and is provided in the form of a plurality of strips that are tilted in a third dimension relative to said first and second dimension by means of at least one translucent spacer provided per strip, supporting a lower horizontal side of the respective strip.

In other words, the present invention basically requires three parts: a PV-panel, a cover in the shape of an elongated transparent strip and a spacer supporting one side of said cover. These parts are preferably assembled to a camouflaged BIPV by adhering the upper parts of a plurality of such spacers to the lower horizontal sides of a multitude of such strips and the lower parts of said spacers to the top surface which means frontside of the PV-panel's photovoltaic laminate. The lower horizontal side of the strip is, in other words, the side the strip rests on in the assembled condition. Accordingly, if it is referred to an upper horizontal side of the strip herein, this addresses the side oriented towards the sun in assembled condition.

By creation of a multitude of preferably overlapping, debris repellent inlets and outlets for cooling air to the top surface of a fully covered PV, the cooling and ventilation function is significantly improved. Further advantages from additional features will be described in the detailed description of the invention.

In a preferred embodiment of the camouflaged BIPV of the invention, said spacers have an open structure to allow air flowing in sections in between the frontside of the PV-panel and the spacer.

In a further preferred embodiment of the camouflaged BIPV of the invention, the spacers are made by reinforced fiberglass cast in resin between two transparent foils of plastic.

In a further preferred embodiment of the camouflaged BIPV of the invention, said fixation of said cover to the front side is made by a transparent adhesive.

In a further preferred embodiment of the camouflaged BIPV of the invention, said strips are spaced apart from each other, thereby in sections exposing the frontside of the PV-panel.

In a further preferred embodiment of the camouflaged BIPV of the invention, said cover has at least one cut-out to access an area behind the cover.

In a further preferred embodiment of the camouflaged BIPV of the invention, an overlapping step is formed between a lower horizontal side of one strip and an upper horizontal side of an adjacent strip.

Another aspect of the invention refers to an installation kit to install a camouflaged BIPV of the invention, according to the foregoing description. Said installation kit comprises a PV-panel, a ventilated PV-substructure, a ventilated translucent cover and a fixation means suitable to fix said cover to a frontside of said PV-panel.

Yet another aspect of the invention refers to a building structure, comprising a plurality of camouflaged BIPVs of the invention according to the foregoing description, a cladding-substructure and a common substrate, wherein said camouflaged BIPVs and said cladding-substructure are installed on said common substrate.

The different embodiments described in this application are compatible with each other, unless indicated otherwise. This in particular applies to single features, unless they are disclosed having an inseparable technical context.

In the following, the present invention is described in more detail with respect to accompanying drawings.

### BRIEF DESCRIPTION OF THE DRAWINGS

Figures 1-3 show an axonometry and cross-sectional view of the invention. Orientation, scale and proportions are solely selected for presentation reasons. It is shown in:
- Figure 1: a building structure with a camouflaged BIPV in an axonometric detail;
- Figure 2: a horizontal cross-sectional view of the building structure of Figure 1 in an area of a fixation of a translucent spacer; and
- Figure 3: a vertical cross-sectional view of the building structure of Figure 1 in an area of overlapping steps and spaced steps.

### DETAILED DESCRIPTION OF THE INVENTION

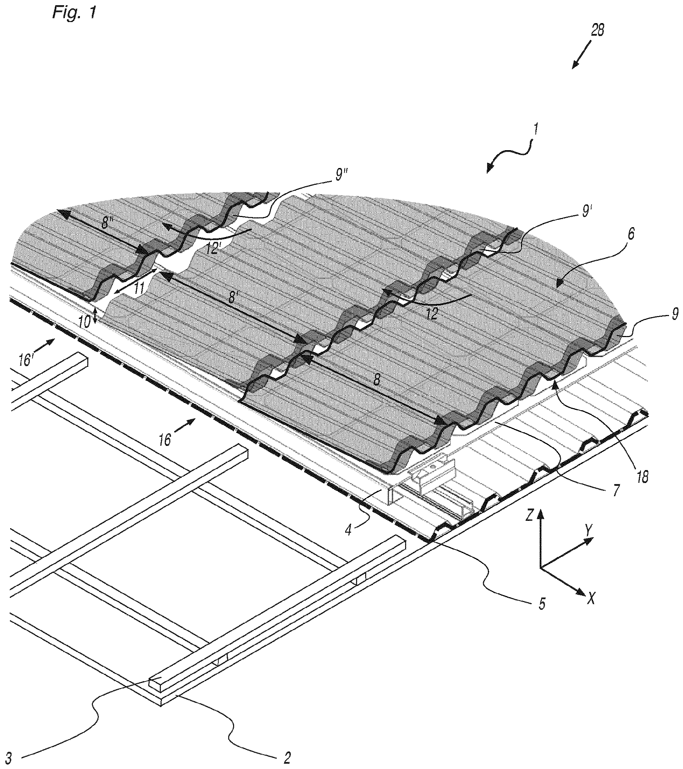

Figure 1 shows a building structure 28 according to the present invention. Said building structure has a plurality of camouflaged BIPVs 1 according to the present invention. Further said building structure 28 has a cladding-substructure 3 and a common substrate 2. Said camouflaged BIPVs 1 and said cladding-substructure 3 are installed said common substrate 2.

The camouflaged BIPV 1 of the invention comprising a PV-panel 4 oriented in a first dimension X and a second dimension Y, further comprising a ventilated PV-substructure 5 and a ventilated translucent cover 6. Said cover 6 is fixed to a frontside 7 of said PV-panel 4 and is provided in the form of a plurality of strips 8, 8', 8" that are tilted in a third dimension Z relative to said first and second dimension X, Y by means of at least one translucent spacer 9, 9', 9" provided per strip 8, 8', 8", supporting a lower horizontal side 18 of the respective strip 8, 8', 8".

These features of the building structure 28 and the camouflaged BIPV 1 are essential to the invention. In the following, some of these features are described on more detail and further additional preferred but optional features are described.

The camouflaged BIPV 1 is fitted on the same substrate 2 as the surrounding roof or façade cladding's substructure 3. Said camouflaged BIPV 1 comprises the PV-panel 4 oriented in the first X and a second dimension Y, the ventilated and preferably suppressed PV-substructure 5, outlined with a dashed line for the sake of clarity, and at least the at least one ventilated translucent cover 6 fixed to the frontside 7 of the PV-panel 4 in the form of the multiple strips 8, 8', 8".

A shape of a lower strip 8 and an upper strip 8" are outlined by a thicker line. Said strips 8, 8', 8"are tilted in the third dimension Z by means of said translucent spacers 9, 9' and 9" supporting the lower horizontal side 18 of each individual strip 8, 8', 8", thereby forming preferably debris repellent air inlets 12.

In this example the strips 8, 8', 8" are elongated in the first dimension X, but one may also imagine an elongation of the strips 8, 8', 8" in the second dimension Y. Many different transparent cover materials may be given a profile shape with wave modules adapted to various claddings and thus creating a camouflaging effect, sought after here.

In the following certain terms are explicitly defined, said definitions being preferred but not exclusive. In the present invention, "a camouflage effect" means a visually perceivable harmonizing of the PV-panel 4 with surrounding cladding, yet letting a large majority of the sun's insolation pass through to its PV-cells. In the present invention, "translucency" is defined as a kind of transparency allowing passing of light, but not necessarily of eye sight. "Insolation" is defined as the power received from the sun per unit area.

In contrast to the prior art, the present invention's tilting strips 8, 8', 8" are improving ventilation and cooling to the frontside 7 of the laminate, potentially in a stepping fashion familiar from roof tiles. It is important to mention that in the present invention a fully covering cover does not exclude areas or sections between strips 8, 8', 8" where the frontside 7 of the PV-panel 4 may be exposed to weather and insolation. The meaning of the verb "cover/covering" is defined as the ability to serve as a frontside 7 of the entire PV-panel 4 for eye sight, preferably from the viewpoint of a pedestrian. The definition of "cover/covering" is not the act of closing and sealing off or shutting out.

As a matter of fact, the cooling air and rain let in through the cover, is a precondition for the spacers to counteract the heating effect of the covers in previous art. Spacers attached on a translucent covering sheet without multiple air inlets would not as well serve its purpose of cooling the front of the photovoltaic laminate on a camouflaged PV-panel by means of a ventilation.

Figure 1 also shows a preferred feature of the present invention, wherein said translucent strip 8, 8', 8" may be profiled having a wave-height 10 and a wave-length 11 forming more spacious inlets 12 and outlets of air hereby further improving the airflow through the space under the cover 6. Roof and façade tiles and other type of claddings have varying wave-length modules determining a more or less fixed covered width, and other modules determining the spacing between each step, the latter sometimes having a more flexible overlap.

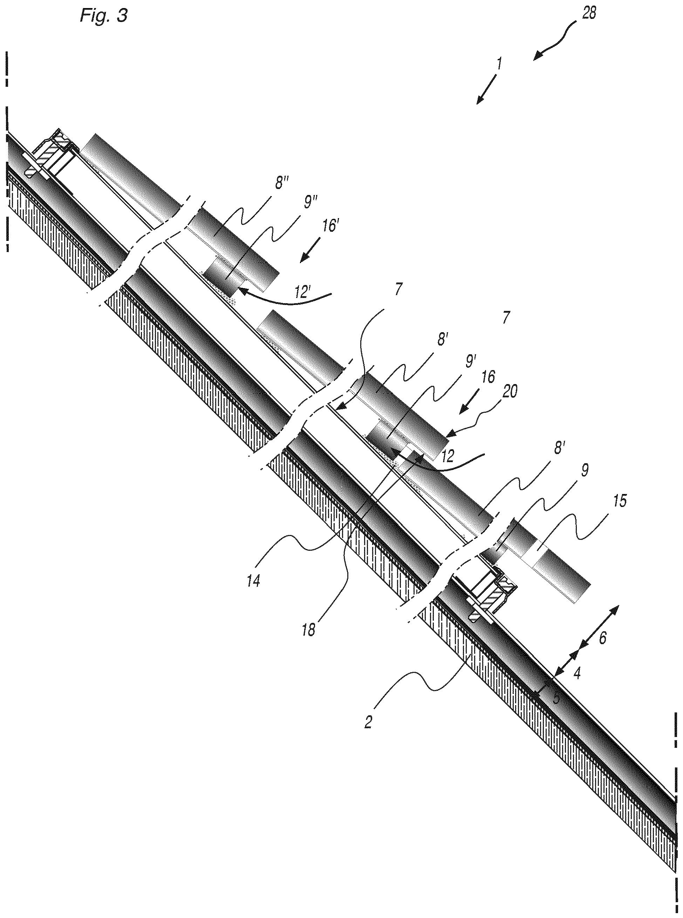

In the present invention, the potential shape of a profile may be important, as well as the spacing of the steps 16, 16' (also see Figure 3) and the width of the PV-substructure 5. Ideally, the spacing between each step 16, 16' corresponds to the spacing of the cladding step in which it is intended to be integrated. Also, the module width of the substructure 5 may correspond to a multitude of wave-lengths of surrounding cladding.

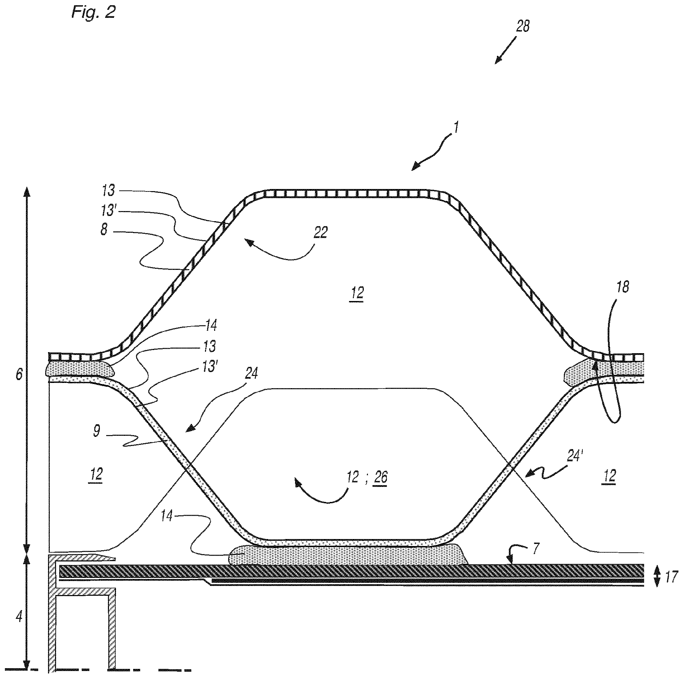

Figure 2 shows a horizontal cross-sectional view of the building structure 28 of Figure 1 in an area of a fixation of a translucent spacer 9. The view is shown onto the first dimension X as illustrated in Figure 1. It shall be understood that the following description may be related to specific components, such as the spacer 9' or strip 8. However, this is because the description is exemplarily. So it will be understood by a person skilled in the art, that the same design principles can be applied to similar components not explicitly addressed.

In the horizontal cross-sectional view of Figure 2, the PV-panel 4 and the ventilated translucent cover 6 are indicated by respective arrows on the left. Said cover 6 is fixed to the frontside 7 of said PV-panel 4 in the form of a said multitude of strips 8, 8', 8", wherein strip 8 is shown in Figure 2. Strip 8 is tilted in the third dimension Z by means the translucent spacer 9 supporting the lower horizontal side 18 of strip 8.

A preferred feature of the present invention shown in Figure 2, is the spacer 9 have an open structure which makes them in section 26 open for flowing air in said inlets 12 hereby even further improving the airflow under the cover 6.

In another preferred feature of the present invention, said spacer 9 may be made from a reinforcing fiberglass cast in resin between two transparent foils 13, 13' of plastic, addressing the problem of how to manufacture a strong, flexible and weather resistant spacer 9.

These, slightly cloudy sheets of reinforced plastic may be cut to spacers 9 having the right degree of translucency, sought after here. Pultrusion is one way of manufacturing a profiled sheet of plastic from which the translucent spacer 9 and also the strip 8 may be cut. In a standard pultrusion process the reinforcement materials like fibers or woven or braided strands are impregnated with resin, followed by a preforming system and pulled through a heated stationary die where the resin undergoes polymerization.

In a preferred pultrusion process the impregnation is done by pouring a transparent thermosetting resin on a fiber-glass reinforcement between two transparent foils 13, 13' of plastic, preferably made of polyethylene terephthalate (PET), while pulling the assembly into a heated molding oven where a sandwich is cured and bonded with the matrix while gradually passing through a series of molding models forming a sheet that is profiled in two dimensions. The term "cut" means all kinds of operations separating pieces from the sheet of plastic, including the operations of chopping and slitting with some kind of cutting tool including a knife, saw, water-jet cutter, laser cutter, air-jet cutter, plasma cutter, guillotine cutter etc.

Furthermore, Figure 2 shows another preferred feature of the present invention wherein a preferred fixation of said translucent spacers 9 supporting the lower horizontal side 18 of each individual strip 8, 8', 8", is made by adhesion using a transparent and flexible, preferably silicone, adhesive 14.

Preferably the spacers 9 may be adhered to the frontside 7 of said PV-panel's 4 photovoltaic laminate 17 and to said strip 8 of cover 6, hereby achieving a durable and cost-effective fixation in different weathering conditions. If the transparent foils 13, 13' of said spacer 9 is of a type that is proving difficult to bond with any given adhesive, one or both of the cover's foils 13, 13' may be at least partly removed, potentially with abrasives, in order to improve the adhesive's 14 bonding properties.

Figure 3 shows a vertical cross-sectional view of the building structure of Figure 1 in an area of overlapping steps 16 and spaced steps 16'. The view is shown in the second dimension Y as illustrated in Figure 1.

As shown in Figure 3, the camouflaged BIPV 1 is preferably fitted on the same substrate 2 as is the surrounding roof or façade cladding's substructure 3.

Said camouflaged BIPV 1 comprises the PV-panel 4, the ventilated PV-substructure 5 and the ventilated translucent cover 6, each indicated by respective arrows.

The cover 6 is fixed to the frontside 7 of said PV-panel 4 in the form of the multitude of strips 8, 8', 8" that are tilted in the third dimension Z by means of the translucent spacers 9, 9', 9" supporting the lower horizontal side 18 of each respective strip 8, 8', 8".

Figure 3 also shows another preferred feature of the present invention wherein said strips 8, 8', 8" may have overlapping steps 16 (between 8 and 8') or spaced steps 16' (between 8' and 8"), the latter forming a cover exposing various amount of PV-panel 4 to insolation but not necessarily to eye sight, hereby letting in additional insolation to the frontside 7 of the PV-panel 4.

Furthermore, another preferred feature of the present invention is shown wherein one or more of said strips 8, 8', 8" may have at least one cut-out 15, preferably a cut perforation of multiple holes, hereby facilitating installation by allowing tools to reach through the cover 6 and in addition further improving the circulation of air and rain on the front of the PV-panel 4.

Another preferred feature of the present invention is shown wherein the overlapping step 16 is formed between the lower horizontal side 18 of the strip 8 and an upper horizontal side 20 of the adjacent strip 8', hereby providing for a debris repellant air inlet 12 and various degrees of overlapping.

Another aspect of the present invention refers to a kit for installation of a camouflaged BIPV 1 preferably comprising a plurality of PV-panels 4 with a fixed ventilated translucent cover 6 of strips 8, 8', 8" and spacers 9, 9', 9" and at least one ventilated overlapping PV-substructure 5, hereby addressing the problem of how to fasten and drain a camouflaged BIPV 1.

## Claims

1. A camouflaged BIPV (1) comprising a PV-panel (4) oriented in a first dimension (X) and a second dimension (Y), further comprising a ventilated PV-substructure (5) and a ventilated translucent cover (6), **characterized in that** said cover (6) is fixed to a frontside (7) of said PV-panel (4) and is provided in the form of a plurality of strips (8, 8', 8") that are tilted in a third dimension (Z) relative to said first and second dimension (X; Y) by means of at least one translucent spacer (9, 9', 9") provided per strip (8, 8', 8"), supporting a lower horizontal side (18) of the respective strip (8, 8', 8").

2. A camouflaged BIPV (1) according to claim 1, wherein said cover (6) has a wave profile (22) having wave-heights (10) and wave-lengths (11) and wherein inlets (12) for air are formed at least between said wave profile (22) and said spacer (9).

3. A camouflaged BIPV (1) according to any of the preceding claims,
wherein said spacers (9) have an open structure to allow air flowing in sections (26) in between the frontside (7) of the PV-panel (4) and the spacer (9).

4. A camouflaged BIPV (1) according to any of the preceding claims,
wherein the spacers (9) are made by reinforced fiberglass cast in resin between two transparent foils (13, 13') of plastic.

5. A camouflaged BIPV (1) according to any of the preceding claims,
wherein said fixation of said cover (6) to the frontside (7) is made by a transparent adhesive (14).

6. A camouflaged BIPV (1) according to claim 5, wherein said strips (8) are spaced apart from each other, thereby in sections exposing the frontside (7) of the PV-panel (4).

7. A camouflaged BIPV (1) according to claim 5, wherein said cover (6) has at least one cut-out (15) to access an area behind the cover (6).

8. A camouflaged BIPV (1) according to claim 5, wherein an overlapping step (16) is formed between a lower horizontal side (18) of one strip (8) and an upper horizontal side (20) of an adjacent strip (8').

9. An installation kit to install a camouflaged BIPV (1) according to any of the preceding claims, comprising a PV-panel (4), a ventilated PV-substructure (5), a ventilated translucent cover (6) and a fixation means (14) suitable to fix said cover (6) to a frontside (7) of said PV-panel (4).

10. A building structure (28), comprising a plurality of camouflaged BIPVs (1) according to any of claims 1 to 8, a cladding-substructure (3) and a common substrate (2), wherein said camouflaged BIPVs (1) and said cladding-substructure (3) are installed on said common substrate (2).
